# EUROPEAN PATENT APPLICATION

(11) **EP 1 685 762 A2**
(43) Date of publication of application: **02.08.2006**
(21) Application number: 06250207.5
(22) Date of filing: 16.01.2006
(51) Int. Cl.: A21B 1/10, A21B 1/48, A47J 37/12

(54) **Elevated temperature cooking system**

(30) Priority: 31.01.2005 US 47121
(71) Applicant: FMC Technologies, Inc., Chicago, IL 60601 (US)
(72) Inventor: Randall, James, Huron Ohio 44839 (US)
(74) Representative: Stainthorpe, Vanessa Juliet

(57) **Abstract**

A cooking system includes a housing that encloses a chamber having a heat exchanger. A synthetic thermal fluid is circulated through the heat exchanger at temperatures between approximately 315 and 400°C [600 degrees F and 750 degrees F]. The cooking system may be used in connection with a continuous oven, a fryer and/or a heated platen thermal heated cooking system. The cooking system may further include both one or more cooking ovens operating at a first temperature and one or more fryers operating at a second, lower temperature, each heated by a common thermal fluid heater.

## Description

### BACKGROUND OF THE INVENTION

### Field of the Invention

This invention relates to a cooking oven for cooking of food products using a synthetic thermal fluid.

### Description of Prior Art

Large scale, batch cooking ovens for cooking food, such as linear cooking ovens, typically include a conveyor or conveyor belt for conveying food to be cooked from an inlet to an outlet and through a cooking chamber. A heat source, air mover and heat exchanger are typically provided within the cooking chamber for cooking the food provided on the conveyor.

Existing cooking systems, including linear ovens, fryers and heated platen cooking systems, typically use Paratherm NF; a mineral oil-based thermal fluid for heat exchange within the cooking chamber, grill and/or fryer. This thermal fluid limits cooking temperatures to below 315°C [600 degrees F] because the Paratherm NF oil will break down if used at temperatures continuously above 315°C [600 degrees F] with an oil-air interface.

### SUMMARY OF THE INVENTION

It is therefore an object of this invention to provide a cooking oven that provides an elevated temperature cooking range using a synthetic oil thermal fluid.

It is another object of this invention to provide a cooking device that is heated by thermal fluid at temperatures between approximately 315 and 400°C [600 and 750 degrees F], and more preferably between approximately 315 and 340°C [600 and 650 degrees F].

A cooking device according to one preferred embodiment of this invention includes a housing having an inlet and an outlet, said housing enclosing a chamber. The chamber may comprise a cooking chamber, a deep fat fryer reservoir or a grill enclosure. A heat exchanger is preferably positioned in fluid communication with the chamber and includes a circulating flow of synthetic thermal fluid. The synthetic thermal fluid, or heating oil, preferably circulates within the heat exchanger at a temperature between approximately 315 and 400°C [600 and 750 degrees F].

The invention preferably additionally includes a system for protecting the synthetic thermal fluid from degradation including a sealed inert gas atmosphere, such as nitrogen; a bypass filter to remove thermal fluid sludge; and a periodically electronic initiated purge of volatile decomposition products. A separate local loop for fryers to provide a lower temperature food safe heating may also be necessary. Such a separate local loop may be used in a thermal fluid system that also heats ovens that demand higher temperatures.

### BRIEF DESCRIPTION OF THE DRAWING

The above-mentioned and other features and objects of this invention will be better understood from the following detailed description taken in conjunction with the drawing wherein:
Fig. 1 is a side schematic view of a cooking oven according to one preferred embodiment of this invention; and
Fig. 2 is a schematic of a high temperature food plant thermal fluid system.

### DESCRIPTION OF PREFERRED EMBODIMENTS

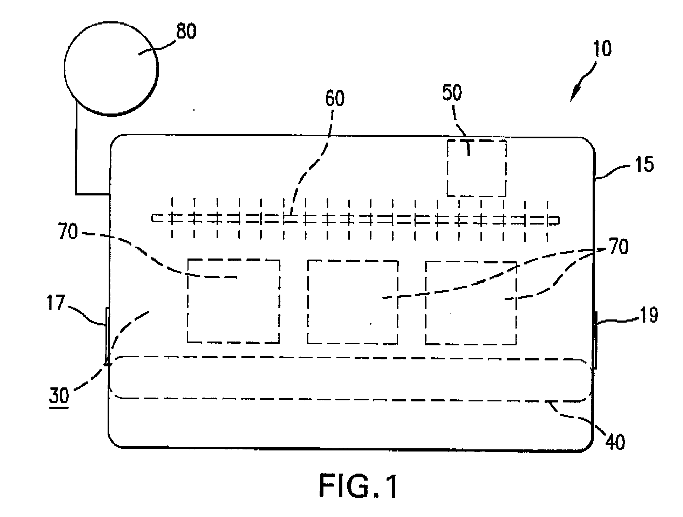

Fig. 1 shows a cooking oven according to one preferred embodiment of this invention. As shown, cooking oven 10 includes housing 15 having inlet 17 and outlet 19. Housing 15 encloses chamber 30, namely a cooking chamber. Conveyor 40, preferably a conveyor belt or similar device known to those having ordinary skill in the art, extends between inlet 17 and outlet 19 and through chamber 30. Conveyor 40 is preferably a pervious belt thus permitting air and liquid to flow through.

According to a preferred embodiment of this invention, conveyor 40 operates continuously whenever cooking oven 10 is in operation. Thus, cooking oven 10 may be referred to as a continuous oven. Uncooked food is loaded onto conveyor 40 continuously at inlet 17 and transported through chamber 30 and emerges cooked, at the outlet end of the oven.

Alternatively, or as described in more detail below, in addition, a cooking system according to this invention may further comprise fryer 20, such as a deep fat fryer or a grill arrangement such as a heated platen thermal heated cooking system. In such embodiments, chamber 30 may comprise a fryer reservoir or a grill enclosure. Any such cooking system that relies upon a traditional mineral oil such as Paratherm NF oil for heat transfer would benefit from the subject invention.

According to one preferred embodiment of this invention shown in Fig. 1, air distribution system 50 is positioned in fluid communication with chamber 30. One or more fans, blowers or other circulating devices preferably circulate conditioned air to air manifolds which direct such conditioned air on, in or across food items. As used in this specification and claims, air flow is defined as conditioned air, vapor, gas and/or fluid used to circulate through cooking oven 10. According to one preferred embodiment of this invention, air flow comprises steam of varying temperatures and moisture content.

Heat exchanger 60 is preferably positioned in fluid communication with chamber 30, as shown in Fig. 1. Heat exchanger 60 preferably directs air from air distribution system 50 through chamber 30 and across conveyor 40. Alternatively, heat exchanger is positioned in fluid communication with a fryer or a heated platen system for generating suitable heat on or within the cooking environment.

Heat exchanger 60 may be a flat plate heat exchanger, fin and tube heat exchanger or similar heat exchanger that preferably includes an internally circulating flow of thermal fluid. Flat plates may include a hollow portion or channel for containing and transporting a thermal fluid, specifically a synthetic heating oil. The synthetic heating oil preferably passes through channels or tubes within heat exchanger 60 and serves to elevate the temperature of the heat exchanger plates or fins to a desired temperature or temperature range. A preferred synthetic heating oil may comprise SLF1 HTF 32 from Synthetic Laboratories & Filters, or similar such synthetic heating oil that permits operating temperatures up to approximately 340°C [650 degrees F]. Silicon based thermal fluid oils such as Syltherm 800 can operate to 400°C [750 degrees F]. Thermal fluid heating permits a higher humidity oven atmosphere than conventional gas-fired heating systems because of the absence of moisture diluting entering combustion air.

Depending upon the flow pattern of air within cooking oven 10, heat exchanger 60 may be positioned in various parts of cooking oven for optimum performance. As a result of the described configuration of cooking oven 10, heat exchanger 60 may direct air flow from an upper portion of chamber 30 to a lower portion of chamber 30 and across food products and/or from one end of chamber 30 to the opposite end and across food products.

Chamber 30 generally includes a platform in line with one or more air manifolds 70, an air mover positioned over the platform and, preferably at an end of heat exchanger 60 positioned adjacent to the platform wherein air from the air mover is induced and/or forced through heat exchanger 60 and through air manifold 70 across the platform. According to such an embodiment, the platform may comprise conveyor 40, cooking surface, or any other sturface requiring redirected heat from an air mover and/or heat source to another location within chamber 30.

More specifically, according to one preferred embodiment of this invention, heat exchanger 60 is positioned adjacent conveyor 40 and induces air through air manifold 70 and across food items on conveyor 40. In addition, the air may travel through a damper system and/or a plurality of manifolds, whereupon such air is impinged on the food items and the cooled return air is then returned through the air manifold.

According to one preferred embodiment of this invention, thermal fluid heater 80 is connected within heat exchanger 60. Thermal fluid heater 80 preferably operates at temperatures exceeding approximately 315°C [600 degrees F] and thereby maintains a suitable temperature of the synthetic thermal fluid to between approximately 315 and 400°C [600 degrees F and 750 degrees F].

The upper limit of most practical cooking devices is between approximately 260 and 290°C [500 degrees F and 550 degrees F]. Also, a 38°C [100 degree F] minimum temperature differential between thermal fluid and chamber temperature is normally required to achieve desired heating capacity. Thus, a preferred thermal fluid temperature according to a preferred embodiment of this invention is in the range of 315 to 340°C [600 to 650 degrees F].

In fryers 20 or in combination cooking oven 10/fryer 20 systems, thermal fluid temperatures are increased to increase oven efficiency, the heat flux in the fryer heat exchanger inlets will become large. This causes the frying oil next to the heat exchanger to approach the same temperature as the thermal fluid. At this condition, premature frying oil damage may occur.

The use of thermal fluid heated fryers in food processing plants has lengthened the safe life of frying oil. The thermal fluid heated fryers eliminated the hot spots on the old gas fryer tubes and thus avoided forming carcinogenic decomposition chemicals in the frying oil.

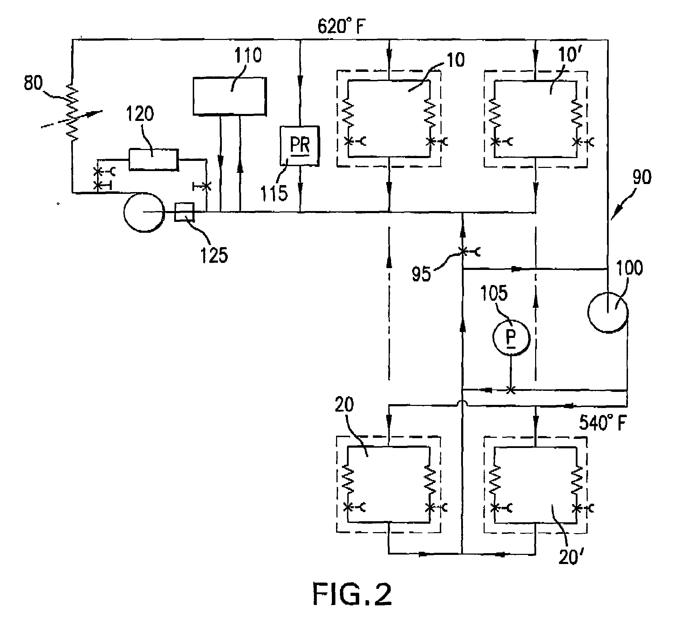

According to a preferred embodiment of this invention, such as shown schematically in Fig. 2, a cooking system including a synthetic thermal fluid includes heater 80 supplying a constant temperature thermal fluid for heating both ovens 10 and fryers 20. Specifically, Fig. 2 shows a cooking system according to one preferred embodiment of this invention that includes two cooking ovens 10, 10' and two fryers 20, 20'.

Accordingly, Fig. 2 shows a schematic of a local loop system 90 based on 2-way valves that protects frying oil in fryers 20, 20' while supplying high temperature thermal fluid to ovens 10, 10'. A similar local loop system 90 can be constructed using 3-way valves. This system according to a preferred embodiment of this invention is designed to supply thermal fluid at two temperatures. The thermal fluid circulating at a first, higher temperature is preferably used for ovens 10, 10'. The thermal fluid circulating at a second, lower temperature is preferably used for fryers 20, 20'. According to a preferred embodiment of this invention, thermal fluid heater 80 outputs the higher temperature thermal fluid. A pair of supply and return pipes are preferably provided from a remote location, such as a utility room, to a location central to the cooking lines. Cooking zones within ovens 10, 10' are preferably supplied directly from the heater pipes.

According to a preferred embodiment of this invention, zone control valves of both ovens 10, 10' and fryers 20, 20' supply a variable amount of the heated thermal fluid to ovens 10, 10' and fryers 20, 20' to maintain constant frying oil or constant oven atmosphere temperature. As discussed above, traditionally, the thermal fluid temperature was maintained within a range of approximately 260°C [500 degrees F] to approximately 277°C [530 degrees F] for fryers. The development of thermal fluid heated ovens required and permitted a higher thermal fluid temperature than traditional fryers. Such thermal fluid heated ovens have been rated as high for use with thermal fluid as hot as 300°C [572 degrees F]. Such thermal fluid heated ovens typically require a very hot fluid because the fryers are heating frying oil while ovens are heating air.

Prior to the invention described herein, prior art thermal fluid heaters have been limited to approximately 300°C [572 degrees F] output temperature. As a result, thermal fluid heated ovens may struggle to produce adequate heat. The present invention enables thermal fluid heaters to obtain temperatures of approximately 310°C [590 degrees F] up to approximately 325°C [620 degrees F] or higher for supplying thermal fluid at such temperatures to both ovens 10 and fryers 20. Such temperatures, without additional controls, may result in damaging frying oil temperatures in the boundary layer of the thermal fluid heat exchanger.

Put another way, as thermal fluid temperatures are increased to increase oven efficiency, the heat flux in the heat exchanger inlets of fryer 20 will become large. This causes the temperatures of the frying oil next to the heat exchanger to approach the temperatures of the thermal fluid. At this condition, premature frying oil damage may be likely.

According to one preferred embodiment of this invention shown schematically in Fig. 2, fryer local loop valve 95 and fryer local loop pump 100 supply a lower temperature fluid to fryers 20, 20'. Cooking zones within fryers 20, 20' are supplied from this local loop.

A preferred embodiment of this invention having the fryer local loop preferably uses a separate fryer local loop to provide a lower, food safe temperature heat source to fryers 20, 20' while providing efficient high temperature fluid to ovens 10, 10' from a single thermal fluid heater 80. The system according to this embodiment further provides more accurate, stable fryer temperature control when used with PID control loops due to lower fryer supply temperatures.

Benefits of the subject invention and the resulting higher operating temperatures include a reduction in heat exchanger size and thermal piping size and cost while maintaining a cooking system having the same heat capacity and operating temperatures in the 260 to 290°C [500 to 550 degrees F] range. Food products, such as sausage, are cooked with beneficial appearance and taste as a result of elevated cooking temperatures. Capacity and throughput of food product through the cooking system is improved as a result of larger thermal capacity of heat exchanger 60 and synthetic thermal fluid.

Operation at very high temperatures often breaks down the thermal fluid molecules to lighter, volatile fractions that are preferably allowed to accumulate in expansion tank 110 connected with respect to the cooking device. Expansion tank 110 is preferably covered with a Nitrogen blanket to eliminate oxidation. Periodic flushing of expansion tank 110, such as once per month, is recommended to prevent a buildup of volatiles. Prompting for this flushing may be included in control software. An example of such control software is LINK™ software supplied by FMCTI. In addition, pressure regulator 115 may be connected within the system to maintain desired operating pressures within the system.

At high temperatures, some thermal fluid molecules polymerize to form sludge. The high temperature system according to this invention preferably includes bypass filter 120 and strainer 125 to permit sludge removal.

While in the foregoing specification this invention has been described in relation to certain preferred embodiments thereof, and many details have been set forth for purpose of illustration, it will be apparent to those skilled in the art that this invention is susceptible to additional embodiments and that certain of the details described herein can be varied considerably without departing from the basic principles of the invention.

## Claims

1. A cooking system comprising:
a cooking oven;
a heat exchanger positioned in fluid communication with the cooking oven; and
a synthetic thermal fluid circulating within the heat exchanger and operating at a temperature between approximately 315 and 400°[600 and 750 degrees F].

2. The cooking system of Claim 1 further comprising:
a fryer positioned in communication with the cooking oven;
a local loop system connected between the fryer and the synthetic thermal fluid supplied to the cooking oven, the local loop system permitting the synthetic thermal fluid to operate at two distinct temperatures.

3. The cooking system of Claim 2 further comprising:
a thermal fluid heater positioned in fluid communication with the fryer and the cooking oven.

4. The cooking system of any of the preceding claims further comprising a conveyor extending through the cooking oven, the conveyor transporting food products.

5. The cooking system of any of the preceding claims wherein the heat exchanger directs air flow from a top portion of the cooking oven to a lower portion of the cooking oven.

6. The cooking system of any of the preceding claims further comprising:
a thermal fluid heater connected with the heat exchanger, the thermal fluid heater supplying thermal power at temperatures exceeding approximately 315°C [600 degrees F].

7. The cooking system of Claim 1 further comprising:
a fryer positioned in fluid communication with the synthetic thermal fluid supplied to the cooking oven and preferably further comprising a fryer local loop valve and a fryer local loop pump positioned between the fryer and the synthetic thermal fluid supplied to the cooking oven.

8. The cooking system of Claim 1 further comprising:
a local loop system connected with respect to the heat exchanger, the local loop system permitting operation of the cooking system at multiple operating temperatures.

9. A cooking system comprising:
a housing having an inlet and an outlet, the housing enclosing a chamber defining an oven;
a conveyor extending between the inlet and the outlet and through the chamber;
a plurality of manifolds extending above and beneath the conveyor;
an air distribution system positioned above the manifold;
a heat exchanger positioned adjacent the conveyor, the heat exchanger directing air from above the conveyor through the chamber and into the plurality of manifolds, the heat exchanger containing a thermal fluid operating at a temperature between approximately 315 and 400°C [600 degrees and 750 degrees F].

10. The cooking system of Claim 1 or claim 9 wherein the thermal fluid comprises synthetic heating oil.

11. The cooking system of Claim 9 wherein the thermal fluid operates at a temperature exceeding 400°C [750 degrees F].

12. The cooking system of Claim 9 further comprising:
a fryer positioned in fluid communication with the oven and preferably a local loop system positioned between the fryer and the synthetic thermal fluid supplied to the oven, the local loop system providing the thermal fluid to the oven at a different temperature than the thermal fluid provided to the fryer.

13. The cooking system of Claim 12 further comprising:
a local loop valve connected with respect to the fryer; and
a local loop pump connected with respect to the fryer.

14. A method of operation of a cooking system comprising the steps of:
providing a food product into a cooking chamber of a cooking oven;
circulating a synthetic thermal fluid through a heat exchanger connected with respect to the cooking oven; and
operating the heat exchanger at a temperature between approximately 310 and 370°C [590 degrees and 700 degrees F].

15. The method of operating the cooking system of Claim 14 further comprising the step of:
connecting a fryer to the heat exchanger.

16. The method of operating the cooking system of Claim 14 further comprising the step of:
connecting a local loop system between the fryer and the synthetic thermal fluid supplied to the cooking oven, the synthetic thermal fluid circulating at a different temperature through the fryer than the cooking oven.

17. The method of Claim 16 further comprising:
operating the synthetic thermal fluid at a temperature between approximately 310 and 325°C [590 degrees and 620 degrees F] and preferably operating the cooking chamber at a temperature exceeding 315°C [600 degrees F] and the fryer at a temperature below 315°C [600 degrees F].

18. The method of Claim 14 further comprising:
removing sludge from the cooking system with a bypass filter.
